Europäisches Patentamt

European Patent Office

Office européen des brevets

(11) Veröffentlichungsnummer: **0 424 353 A1**

## (12) EUROPÄISCHE PATENTANMELDUNG

(21) Anmeldenummer: **90890269.5**

(22) Anmeldetag: **09.10.90**

(51) Int. Cl.⁵: **B62K 19/36, B62J 1/06**

(30) Priorität: **20.10.89 AT 2415/89**

(43) Veröffentlichungstag der Anmeldung:
**24.04.91 Patentblatt 91/17**

(84) Benannte Vertragsstaaten:
**BE DE ES FR GB IT LU NL SE**

(71) Anmelder: **Austria Metall Aktiengesellschaft**

**A-5282 Braunau am Inn(AT)**

(72) Erfinder: **Appl, Herbert**

**A-5120 St.Pantaleon 3(AT)**
Erfinder: **Braun, Adolf**
**Mozartstrasse 32**
**A-5280 Braunau am Inn(AT)**

(54) Fahrradrahmenknoten zur Aufnahme des Sattelrohres.

㊼ Fahrradrahmenknoten zur Aufnahme des Sattel-rohres (9), wobei der Fahrradrahmenknoten (1) we-nigstens eine etwa normal zur Längsachse der Sattelrohraufnahme (2) stehende, mit ihrer gedachten Außenfläche in die Sattelrohraufnahme (2) ragende Bohrung (10) aufweist, und in dieser Bohrung Klemmteile (11,12) angeordnet sind, die wenigstens ein Schraubbolzen (13) zueinander zieht.

# Fig. 2

## FAHRRADRAHMENKNOTEN ZUR AUFNAHME DES SATTELROHRES.

Bei heute verwendeten Fahrrädern wird das Sattelrohr in den oberen hinteren Fahrradrahmenknoten eingeschoben und durch eine um die Sattelrohraufnahme des Knotens befindliche Schelle in der gewünschten Stellung festgehalten. Zum Festhalten des Sattelrohres wird die Schelle zusammengezogen, wobei auch der um die Sattelrohröffnung befindliche Teil des Fahrradrahmenknotens zusammengedrückt wird. Um die benötigten Kräfte zum Festhalten des Rohres mit geringen Kraftaufwand für den Benutzer zu ermöglichen ist entweder ein Längsschlitz parallel zur Sattelrohrachse vorgesehen oder im Bereich unter der Schelle ein Teil des Knotens entfernt. Auch sind Ausführungen mit konischen Muttern bekannt, die über einen Teil der Öffnung der Sattelrohraufnahmen geschraubt werden und durch Zusammendrücken des Knotens das Sattelrohr festhalten. Auch bei diesen muß ein Teil des Knotens geschlitzt werden.

Nachteilig an dieser Bauweise ist, daß durch die Entfernung eines Teiles des Knotens, dieser in seiner Festigkeit geschwächt und beim Spannen stets auch der Knoten mitverformt wird.

Erfindungsgemäß wird dadurch Abhilfe geschaffen, daß der Fahrradrahmenknoten wenigstens eine etwa normal zur Längsachse der Sattelrohraufnahme stehende, mit ihrer gedachten Außenfläche in die Sattelrohraufnahme ragende Bohrung aufweist, und in dieser Bohrung Klemmteile angeordnet sind, die wenigstens ein Schraubbolzen zueinander zieht.

Bei dieser Bauweise ist es unnötig den Fahrradrahmenknoten zu schlitzen oder einen Teil zu entfernen, da keine nennenswerten Biegekräfte zum Festhalten des Sattelrohres in den Fahrradrahmenknoten eingeleitet werden. Die Spannkräfte werden hauptsächlich zwischen den Klemmteilen und dem Sattelrohr verteilt. Dadurch sind die benötigten Kräfte gering und der Sattel- rohrknoten braucht nicht durch Ausnehmung der Schlitze oder dergleichen geschwächt zu werden.

Eine besonders günstige Bauweises ist so gestaltet, daß die, das Sattelrohr klemmenden Flächen der Klemmteile etwa zylindrisch und parallel zur mit ihnen kooperierenden Außenfläche des Sattlerohres sind.

Dadurch liegt der Klemmteil über einen Teil des Umfanges des Sattlerohres auf, wodurch die Reibfläche groß ist und die beim Spannen aufgebrachten Kräfte sich am Sattelrohr gut verteilen. Dadurch besteht keine Gefahr des Eindrükkens des Rohres. Weiters ist ein sicheres Festhalten und auch Lösen des Sattelrohres gewährleist. Die Gefahr des Verklemmens der Spannteile in ihrer Bohrung ist dabei nicht gegeben.

Zum leichteren Einbauen der Klemmteile und um zu verhindern, daß sie sich bei Spannen verdrehen, ist es vorteilhaft, daß die die Klemmteile aufnehmende Bohrung eine Längsnut aufweist, in die wenigstens eines der Klemmteile eingreift.

Durch radiale Formgebung 21 des Sattelrohres und der Klemmteile kann ein zusätzlicher Formschluß hergestellt werden, wodurch die nötigen Spannkräfte zwischen den Klemmteilen und dem Sattelrohr verringert werden.

Die Erfindung wird anhand der nachstehenden Zeichnungen beschrieben. Es zeigen:

Fig. 1 einen erfindungsgemäßen Fahrradknoten längs I-I in Fig. 2.

Fig. 2 einen Schnitt längs II-II in Fig. 1.

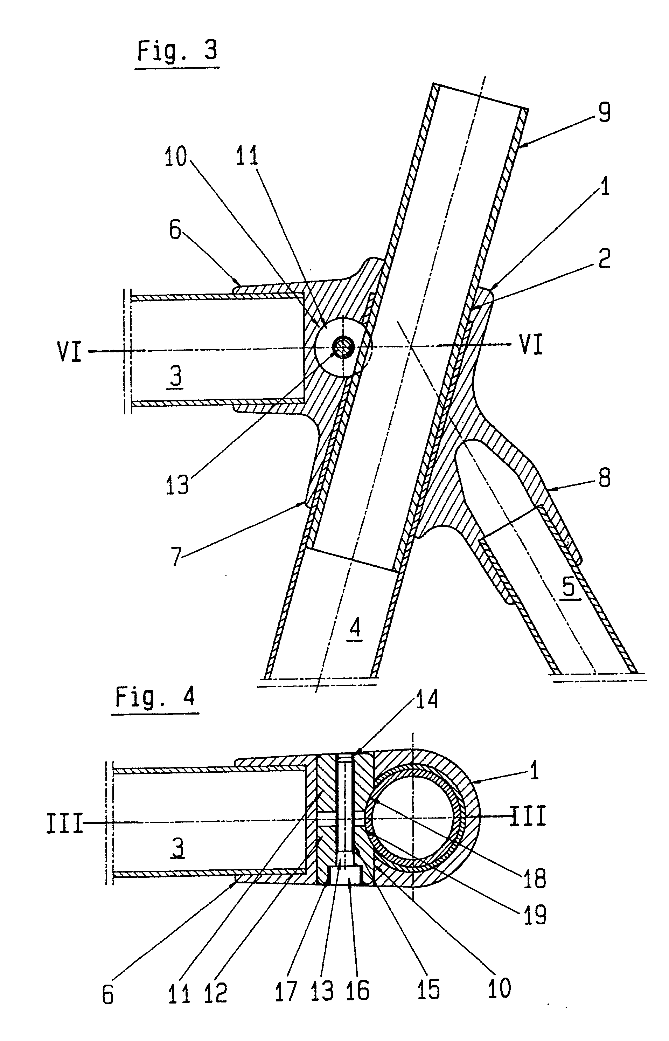

Fig. 3 eine Variante eines erfindungsgemäßen Fahrradknotens im Schnitt längs IV -IV.

Fig. 4 einen Schnitt längs III-III in Fig. 3.

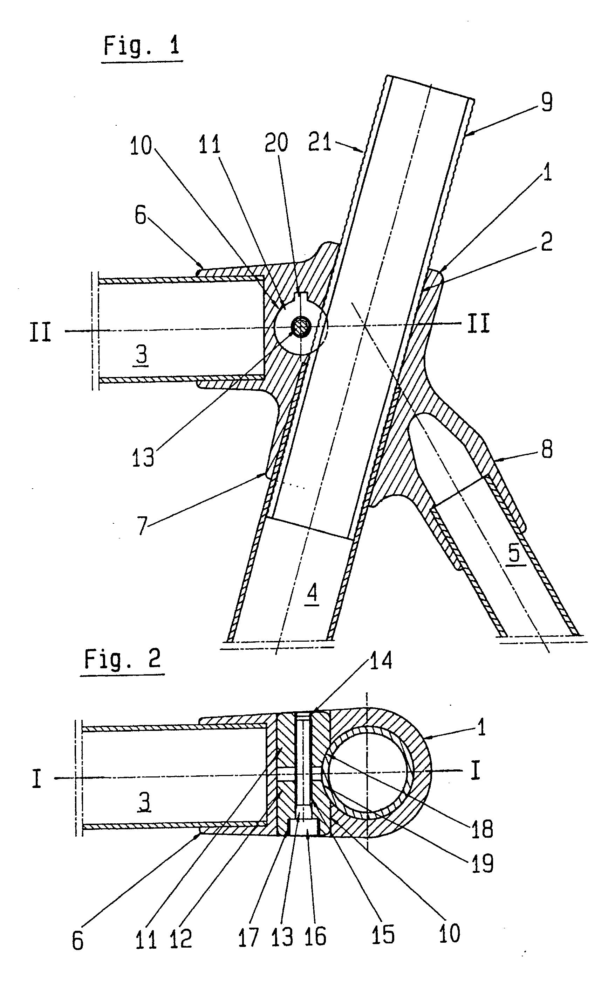

Der Fahrradknoten 1 nimmt die Rahmenstangen 3, 4, 5 in seinen Muffen 6, 7, 8 auf. Das Sattelrohr 9 ist in die Sattelrohraufnahme 2, die fluchtend zur Längserstreckung der Muffe 7 angeordnet ist, eingeschoben. Die Bohrung 10 zur Aufnahme der Klemmteile 11 und 12 ist normal zur Längsachse der Sattelrohraufnahme 2 und ragt mit ihrer gedachten Außenfläche in die Sattelrohraufnahme. In der Fig. 1 ist eine Ausführung mit der Längsnut 20 in der Bohrung 10 dargestellt. Durch diese Nut wird das Festziehen der Schraube im Klemmteil 11 erleichtert. Die Klemmteile 11, 12 und das Sattelrohr 9 besitzen zusätzliche Ausformungen 21, um ein kraftschlüssiges Festhalten des Sattelrohres 9 zu ermöglichen.

Der Klemmteil 11 weist ein Gewinde 14 auf, in die der Schraubbolzen, der durch die Bohrung 15 des Klemmteiles 12 läuft, eingeschraubt ist. Mit seinem Schraubkopf 16 drückt der Schraubbolzen 12 in die Aufnahme 17 des Klemmteiles 12 und spannt die beiden Klemmteile 11 und 12 zusammen.

Je nach Ausführung kann die Rahmenstange 4 unterhalb der Bohrung für die Klemmteile enden oder über die Bohrung hinausragen, je nach benötigter Einspannlänge für die Stangen abhängig von der gesamten Bauweise des Rahmens.

Die Erfindung ist nicht auf die dargestellten Figuren beschränkt, sondern sind diese nur beispielhaft.

### Ansprüche

1. Fahrradrahmenknoten zur Aufnahme des Sattelrohres, dadurch gekennzeichnet, daß der Fahrradrahmenknoten (1) wenigstens eine etwa normal zur Längsachse der Sattelrohraufnahme (2) stehende, mit ihrer gedachten Außenfläche in die Sattelrohraufnahme (2) ragende Bohrung (10) aufweist, und in dieser Bohrung (10) Klemmteile (11, 12) angeordnet sind, die wenigstens ein Schraubbolzen (13) zueinander zieht.

2. Fahrradrahmenknoten nach Anspruch 1, dadurch gekennzeichnet, daß die, das Sattelrohr (9) klemmende Flächen (18, 19) der Klemmteile (11, 12) etwa zylindrisch und parrallel zur mit ihnen kooperierenden Außenfläche des Sattlerohres (9) sind.

3. Fahrradrahmenknoten nach Anspruch 1, dadurch gekennzeichntet, daß die, die Klemmteile (11, 12) aufnehmende Bohrung (10) eine Längsnut (20) aufweist, in die wenigstens eines der Klemmteile (11, 12) eingreift.

4. Fahrradrahmenknoten nach einem der vorhergehenden Ansprüche, dadurch gekennzeichnet, daß das Sattelrohr (9) und die mit dem Sattelrohr (9) kooperierenden Flächen (18, 19) der Klemmteile (11, 12) radiale Ausformungen (21) aufweisen, die ineinandergreifen und dadurch eine formschlüssige Verbindung herstellen.

**Fig. 1**

**Fig. 2**

## Fig. 3

## Fig. 4

**Europäisches Patentamt**

# EUROPÄISCHER RECHERCHENBERICHT

Nummer der Anmeldung

**EP 90 89 0269**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 789 172   (C.F.MUELLER)<br>* das ganze Dokument *<br>— — — | 1,2 | B 62 K<br>19/36<br>B 62 J 1/06 |
| X | US-A-4 120 512   (L.A.NEWLANDS)<br>* das ganze Dokument *<br>— — — | 1,2 | |
| X | FR-A-1 110 413   (F. DE CHABOT)<br>* das ganze Dokument *<br>— — — | 1,2 | |
| A | BE-A-4 222 36   (C. VAN DEN BERGHE)<br>* Seite 4, Zeile 25 - Seite 5, Zeile 15; Figuren *<br>— — — — — | 4 | |

| | RECHERCHIERTE SACHGEBIETE (Int. Cl.5) |
|---|---|
| | B 62 K<br>B 62 J |

Der vorliegende Recherchenbericht wurde für alle Patentansprüche erstellt

| Recherchenort | Abschlußdatum der Recherche | Prüfer |
|---|---|---|
| Den Haag | 14 Januar 91 | FRANKS B.G. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................................................
& : Mitglied der gleichen Patentfamilie, übereinstimmendes Dokument